(19) Europäisches Patentamt
European Patent Office
Office européen des brevets

(11) **EP 3 604 099 A1**

(12) **EUROPEAN PATENT APPLICATION**
published in accordance with Art. 153(4) EPC

(43) Date of publication:
**05.02.2020 Bulletin 2020/06**

(21) Application number: **18778002.8**

(22) Date of filing: **29.03.2018**

(51) Int Cl.:
**B62K 5/10** (2013.01)          **B62K 5/08** (2006.01)
**B62K 21/08** (2006.01)

(86) International application number:
**PCT/JP2018/013328**

(87) International publication number:
**WO 2018/181750 (04.10.2018 Gazette 2018/40)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **31.03.2017 JP 2017071661**
**19.05.2017 JP 2017100276**

(71) Applicant: **Equos Research Co., Ltd.**
**Tokyo 101-0021 (JP)**

(72) Inventors:
• **ARAKI, Keizo**
**Tokyo 101-0021 (JP)**
• **MIZUNO, Akira**
**Tokyo 101-0021 (JP)**

(74) Representative: **TBK**
**Bavariaring 4-6**
**80336 München (DE)**

(54) **VEHICLE**

(57)    To provide a vehicle capable of mitigating driving instability and ensuring driving stability.

A vehicle (10) according to the present invention includes: a vehicle body provided with three or more wheels including at least a steered wheel (12F) and a pair of wheels (12L, 12R) arranged in the vehicle width direction; an inclining part that inclines the vehicle body; an input member (41a) that is turned to input a turning direction; an input shaft (43) that transmits the turning of the input member (41a); a steering shaft (13) that is turned to steer the steered wheel (12F) and is turnable irrespective of the turning operation of the input member; and a connection mechanism (spring (80), etc.) that connects the input shaft (43) and the steering shaft (13) with a fastening force allowing the steering angle of the wheel (12F) to follow the turning direction determined by inclination of the vehicle body and allowing for torque transmission from the steering shaft (13) to the input shaft (43) .

FIG.1

EP 3 604 099 A1

## Description

### Technical Field

The present invention relates to a vehicle having a vehicle body provided with three or more wheels including a steered wheel having a trail.

### Background Art

In recent years, in view of exhaustion of energy resources, reduction of fuel consumption of vehicles has been strongly demanded. On the other hand, due to reduction in vehicle prices and the like, vehicle owners have increased to such an extent that there is a trend that each person owns one vehicle. Therefore, there has been a problem in that a 4-passenger vehicle is occupied by only one person, namely a driver, which is a waste of energy. The most efficient way of reducing the fuel consumption of a vehicle through a reduction of the size thereof is to configure the vehicle as a three-wheel or four-wheel single seater.

However, depending on the traveling state, the stability of a vehicle may be deteriorated. In order to overcome this, there has been proposed a technique of inclining the body of a vehicle in a lateral direction to thereby improve the stability of the vehicle at the time of turning.

Patent Document 1 (JP 2013-71688 A) discloses the following technique. That is, a vehicle is configured to incline its body, and the inclination angle of the vehicle body and the actual steering angle of a steered wheel are calculated based on an input from a steering part, measurement by a vehicle speed sensor and measurement by a lateral G sensor to control the inclination angle and actual steering angle using a dedicated motor.

[Patent Document 1]

JP 2013-71688 A

### Disclosure of the Invention

### Problems to be Solved by the Invention

In the vehicle described in Patent Document 1, the present inventors have developed a vehicle having a mode in which it turns with the wheel 12F in a freely turnable state only by applying a camber angle to the left and right wheels 12L and 12R.

However, in such a mode, when a sudden external disturbance occurs, specifically, when the vehicle body is inclined by inclination or irregularities of a road surface or when the vehicle body receives a crosswind, the vehicle may turn against the driver's intention.

Further, an input member (steering wheel, etc.) for inputting a turning direction and the wheel 12F are not connected to each other, so that the driver can recognize a state where the vehicle body is traveling on an inclined or bumpy road or receiving a crosswind only by visual sensation and G, causing a delay in driver's response.

### Means for Solving the Problems

To solve the above problems, a vehicle according to the present invention includes: a vehicle body provided with three or more wheels including at least a steered wheel and a pair of wheels arranged in a vehicle width direction; an inclining part that inclines the vehicle body; an input member that is turned to input a turning direction; an input shaft that transmits the turning of the input member; a steering shaft that is turned to steer the steered wheel and is turnable irrespective of the turning operation of the input member; and a connection mechanism that connects the input shaft and the steering shaft with a fastening force allowing the steering angle of the steered wheel to follow the turning direction determined by inclination of the vehicle body and allowing for torque transmission from the steering shaft to the input shaft.

Further, in the vehicle according to the present invention, the fastening force of the connection mechanism is changed according to a difference between a turning angle of the input shaft and a turning angle of the steering shaft and/or a difference between a turning angular speed of the input shaft and a turning angular speed of the steering shaft.

Further, in the vehicle according to the present invention, the fastening force of the connection mechanism becomes larger as the difference between the turning angle of the input shaft and the turning angle of the steering shaft is increased and/ or the fastening force of the connection mechanism becomes larger as the difference between the turning angular speed of the input shaft and the turning angular speed of the steering shaft is increased.

Further, in the vehicle according to the present invention, the connection mechanism is a spring mechanism.

Further, in the vehicle according to the present invention, the connection mechanism is a damper mechanism.

Further, in the vehicle according to the present invention, an upper limit is placed on a turning torque that the damper mechanism transmits to the shafts.

Further, in the vehicle according to the present invention, the damper mechanism is a variable damper using MR fluid having viscosity.

Further, the vehicle according to the present invention further includes a spring mechanism whose fastening force is changed according to a difference between the turning angle of the input shaft and the turning angle of the steering shaft.

Further, in the vehicle according to the present invention, the inclining part inclines the vehicle body by generating a difference in drive force between the pair of wheels.

Further, the vehicle according to the present invention further includes a steering torque adjusting mechanism that adjusts a torque to be added to the steering shaft.

Further, the vehicle according to the present invention includes a vehicle speed detection part that detects a vehicle speed, wherein the steering torque adjusting mechanism adjusts the torque to be added to the steering shaft according to the vehicle speed detected by the vehicle speed detection part.

Further, in the vehicle according to the present invention, when the vehicle speed detected by the vehicle speed detection part is 0, the torque generated by the steering torque adjusting mechanism has such a direction and magnitude as to eliminate a rotational phase difference between the input shaft and the steering shaft.

Further, in the vehicle according to the present invention, when the vehicle speed detected by the vehicle speed detection part is not 0, the torque generated by the steering torque adjusting mechanism is set so as to be increased as the vehicle speed is higher.

## Advantageous Effects of the Invention

The vehicle according to the present invention is provided with the connection mechanism that connects the input shaft and the steering shaft with a fastening force allowing the steering angle of the steered wheel to follow the turning direction determined by inclination of the vehicle body and allowing for torque transmission from the steering shaft to the input shaft. Thus, according to the vehicle of the present invention, even when a sudden external disturbance occurs, specifically, even when the vehicle body is inclined by inclination or irregularities of a road surface or when the vehicle body receives a crosswind, it is possible to mitigate driving instability, which can ensure driving stability and prevent the vehicle from turning against the driver's intention.

Further, in the vehicle according to the present invention, the input shaft and the steering shaft are connected to each other through the connection mechanism. Thus, according to the vehicle of the present invention, the driver can recognize a state where the vehicle body is traveling on an inclined or bumpy road or receiving a crosswind through his or her tactile sensation, thus preventing a delay in driver's response.

## Brief Description of the Drawings

FIG. 1 is a right side view illustrating the configuration of a vehicle 10 according to an embodiment of the present invention;

FIG. 2 is a view illustrating the configuration of a lean mechanism of the vehicle 10 according to the embodiment of the present invention;

FIGS. 3A and 3B are back views each illustrating the configuration of the vehicle 10 according to the embodiment of the present invention;

FIG. 4 is a schematic view of the vehicle 10 according to the embodiment of the present invention;

FIG. 5 is a block diagram illustrating the system configuration of the vehicle 10 according to the embodiment of the present invention;

FIG. 6 is a conceptual view explaining the traveling state of the vehicle 10 according to the embodiment of the present invention;

FIGS. 7A and 7B are views illustrating an example of a connection mechanism (spring mechanism) in the vehicle 10 according to the embodiment of the present invention;

FIG. 8 is a graph for explaining the relationship between an angular difference between the shafts and the torque generated by the spring 80;

FIG. 9 is a view illustrating an example of the connection mechanism (damper mechanism 70) in the vehicle 10 according to another embodiment of the present invention;

FIGS. 10A and 10B are views for explaining the relationship between an angular speed difference between the shafts and the torque generated by the damper mechanism 70;

FIGS. 11A and 11B are views illustrating an example of the connection mechanism (damper mechanism 70) in the vehicle 10 according to still another embodiment of the present invention;

FIG. 12 is a view illustrating an example of the connection mechanism in the vehicle 10 according to the still another embodiment of the present invention;

FIG. 13 is a graph illustrating the relationship between the vehicle speed and the steering angle required according to the vehicle speed when the inclination angle $\theta$ of the vehicle body is constant;

FIG. 14 is a graph for explaining the role of a steering torque adjusting mechanism in the vehicle 10 according to a still another embodiment of the present invention;

FIG. 15 is a schematic view for explaining the steering torque adjusting mechanism in the vehicle 10 according to the still another embodiment of the present invention; and

FIG. 16 is a schematic view for explaining the steering torque adjusting mechanism in the vehicle 10 according to still another embodiment of the present invention.

## Best Mode for Carrying Out the Invention

Hereinafter, embodiments of the present invention will be described with reference to the drawings.

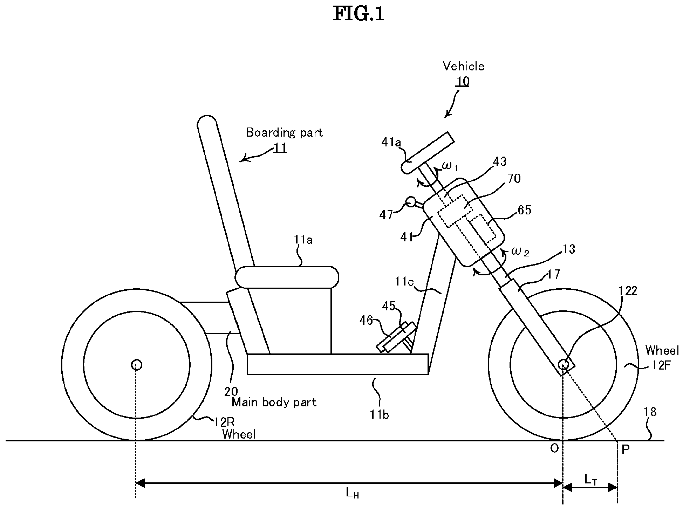

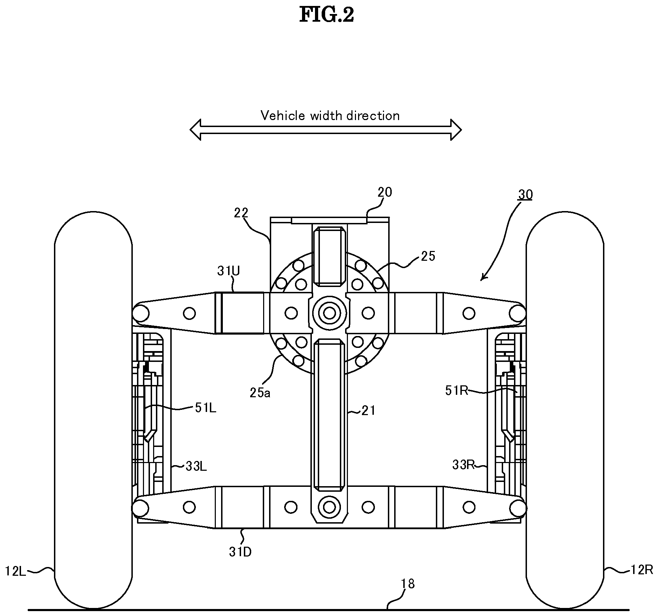

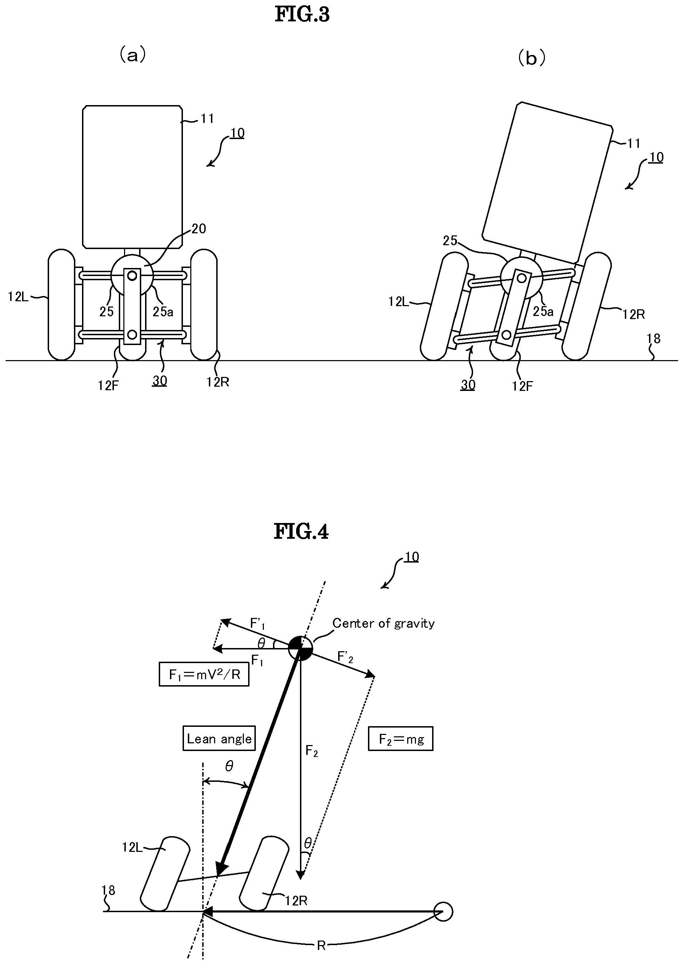

FIG. 1 is a right side view illustrating the configuration of a vehicle according to an embodiment of the present invention, FIG. 2 is a view illustrating the configuration of a lean mechanism of the vehicle according to the embodiment of the present invention, and FIGS. 3A and 3B are back views each illustrating the configuration of the vehicle according to the embodiment of the present invention. FIG. 3A is a view illustrating a state where a vehicle body is upright in posture, and FIG. 3B is a view illustrating a state where the vehicle body is inclined.

In the drawings, reference numeral 10 denotes a vehicle according to the present embodiment. The vehicle 10 includes a main body part 20, a boarding part 11 as a steering part on which a driver boards and performs steering, a wheel 12F as a steerable steered wheel which is a front wheel provided at the width direction center in the vehicle body front side, and left and right wheels 12L and 12R as unsteerable wheels which are rear wheels provided at the vehicle body rear side.

The body part of the vehicle 10 other than the wheels, including the boarding part 11, to which the wheel 12F, wheel 12L, and right wheel 12R are mounted is defined as a vehicle body.

The vehicle 10 further includes a link mechanism 30 that supports the left and right wheels 12L and 12R as a lean mechanism for inclining the vehicle body to the left and right, i.e., a vehicle body inclining mechanism, and a lean motor 25 as an inclination actuator that actuates the link mechanism 30.

The lean mechanism of the vehicle 10 is generically referred to as "inclining part". Further, a term "steered wheel" corresponds to the wheel 12F in the present embodiment, and a term "pair of wheels arranged in the vehicle width direction" corresponds to the left and right wheels 12L and 12R.

The vehicle 10 may be a three-wheeled vehicle having a pair of left and right front wheels and a single rear wheel or may be a four-wheeled vehicle having a pair of left and right front wheels and a pair of left and right rear wheels. In the present embodiment, as illustrated, a three-wheeled vehicle having a single front wheel and a pair of left and right rear wheels is taken as an example. Further, although the steered wheel may function as a drive wheel, the present embodiment assumes that the steered wheel does not function as a drive wheel.

Further, although the lean mechanism for inclining the vehicle body of the vehicle 10 to the left and right is constituted of the link mechanism 30 and the lean motor 25 in the present embodiment, the lean mechanism is not limited to this. For example, as the lean mechanism, a configuration that inclines the vehicle body by generating a difference in drive force between the left and right wheels 12L and 12R may be adopted.

In the vehicle 10 according to the present invention, basically, during turning operation, the angle of each of the left and right wheels 12L and 12R with respect to a road surface 18, i.e., a camber angle is changed, and the vehicle body including the boarding part 11 and the main body part 20 is inclined to the turning inner wheel side, whereby turning performance can be improved, and amenity of the driver can be ensured.

That is, the vehicle body of the vehicle 10 can be inclined laterally (in the left-right direction) as well. In the example illustrated in FIG. 2 and FIG. 3A, the left and right wheels 12L and 12R are upright with respect to the road surface 18 (camber angle is 0°). In the example illustrated in FIG. 3B, the left and right wheels 12L and 12R are inclined to the right with respect to the road surface 18 (camber angle is imparted).

The link mechanism 30 includes a left vertical link unit 33L, a right vertical link unit 33R, an upper lateral link unit 31U, a lower lateral link unit 31D, and a central vertical member 21. The left vertical link unit 33L supports the left wheel 12L and a left rotation drive device 51L having an electric motor that imparts drive force to the left wheel 12L. The right vertical link unit 33R supports the right wheel 12R and a right rotation drive device 51R having an electric motor that imparts drive force to the right wheel 12R. The upper lateral link unit 31U connects the upper ends of the left and right vertical link units 33L and 33R. The lower lateral link unit 31D connects the lower ends of the left and right vertical link units 33L and 33R. The central vertical member 21 extends vertically and is fixed to the main body part 20 at its upper end.

The left and right vertical link units 33L and 33R are rotatably connected to the upper and lower lateral link units 31U and 31D. Further, the upper and lower lateral link units 31U and 31D are rotatably connected to the central vertical member 21 at their center portions. The left and right wheels 12L and 12R, the left and right rotation drive devices 51L and 51R, the left and right vertical link units 33L and 33R and the upper and lower lateral link units 31U and 31D are collectively referred to as "wheel 12", "rotation drive device 51", "vertical link unit 33" and "lateral link unit 31", respectively.

The rotation drive device 51 as a drive actuator is so-called an in-wheel motor having a body as a stator fixed to the vertical link unit 33 and a rotary shaft as a rotor rotatably fitted to the body and connected to the shaft of the wheel 12. The wheel 12 is rotated as a result of rotation of the rotation shaft. The rotation drive device 51 may be a motor of a type other than the in-wheel type.

The lean motor 25 is a rotary type electric actuator including an electric motor and has a cylindrical body as a stator and a rotary shaft as a rotor rotatably fitted to the body. The body is fixed to the main body part 20 through a mounting flange 22, and the rotary shaft is fixed to the upper lateral link unit 31U of the link mechanism 30.

The rotary shaft of the lean motor 25 functions as an inclination shaft for inclining the main body part 20 and is coaxial with a rotary shaft at a connection part between the central vertical member 21 and the upper lateral link unit 31U. When the lean motor 25 is driven so as to rotate its rotary shaft relative to the body, the upper lateral link unit 31U is turned relative to the main body part 20 and the central vertical member 21 fixed to the main body part 20, whereby the link mechanism 30 is actuated, i.e., bent and stretched. As a result, the main body part 20 can be inclined. The lean motor 25 may be used in such a manner that its rotation shaft is fixed to the main body part 20 and the central vertical member 21, and its body is fixed to the upper lateral link unit 31U.

The lean motor 25 has a lean angle sensor 125 for detecting a change in the lean angle made by the link mechanism 30. The lean angle sensor 125 is a rotation angle sensor for detecting the rotation angle of the rotary shaft relative to the body in the lean motor 25 and has, for example, a resolver, encoder, or the like. As described above, when the lean motor 25 is driven so as to rotate its rotation shaft relative to the body, the upper lateral link unit 31U is rotated relative to the main body part 20 and the central vertical member 21 fixed to the main body part 20. Therefore, a change in the angle of the upper lateral link unit 31U relative to the central vertical member 21, i.e., change in the link angle can be detected by detecting the rotation angle of the rotation shaft relative to the body.

The lean motor 25 includes a not-shown lock mechanism for non-rotatably fixing the rotation shaft to the body. It is desired that the lock mechanism be a mechanical structure which does not consume electric power during a period during which it non-rotatably fixes the rotary shaft to the body. The rotary shaft can be non-rotatably fixed to the body, by the lock mechanism, at a predetermined angle relative to the body.

The boarding part 11 is connected to the front end of the main body part 20 through a not-shown connection part. The connection part may have a function of connecting the boarding part 11 and the main body part 20 such that they can be moved relative to each other in a predetermined direction.

The boarding part 11 includes a seat 11a, a foot rest 11b, and a windshield 11c. The seat 11a is a portion where the driver is seated when he or she operates the vehicle 10 to travel. The foot rest 11b is a portion for supporting the feet of the driver and is provided below the seat 11a on the front side (on the right side in FIG. 1) thereof.

A not-shown battery device is disposed on the rear side or lower side of the boarding part 11 or within the main body part 20. The battery device is an energy supply source for the rotation drive device 51 and the lean motor 25. Further, a not-shown controller, a not-shown inverter, not-shown various sensors, etc. are accommodated on the rear side or lower side of the boarding part 11 or within the main body part 20.

A maneuvering device 41 is disposed on the front side of the seat 11a. Members necessary for maneuvering the vehicle 10, such as an input member 41a as a steering device that the driver operates to input steering instruction information such as a steering direction and a steering angle, meters such as a speed meter, indicators, and switches, are disposed on the maneuvering device 41.

The driver instructs traveling conditions (traveling direction, traveling speed, turning direction, turning radius, etc.) of the vehicle 10 by operating the input member 41a and other members. In place of the input member 41a, a steering device of a different type, such as a steered wheel, a jog dial, a touch panel, or a push button, may be used.

The wheel 12F is connected to a steering shaft 13 through a front wheel fork 17 which is a part of a suspension device. The suspension device is similar to a suspension device for a front wheel which is used in, for example, a common motorcycle and a bicycle. For example, the front wheel fork 17 is a telescopic-type fork which includes a spring.

The input member 41a is turned by the driver to input a turning direction. The input member 41a is connected with an input shaft 43 for transmitting the turning of the input member 41a. The turning center of the input shaft 43 and that of the steering shaft 13 coincide with each other. A damper mechanism 70 is provided between the input shaft 43 and the steering shaft 13. Details of the damper mechanism 70 will be described later.

The vehicle 10 according to the present invention has several modes, such as a mode in which the steering angle of the wheel 12F as the steered wheel is controlled according to the operation of the input member 41a and a mode in which the steering angle of the wheel 12F is made freely turnable irrespective of the operation of the input member 41a. There is a predetermined trail $L_T$ between an intersection P between the steering axis (not illustrated) of the wheel 12F and the road surface and a grounding point O of the steered wheel. During turning in the latter mode, the wheel 12F in a freely turnable state is automatically steered following the camber angles of the respective left and right wheels 12L and 12R. Further, in the vehicle 10 according to the present embodiment, the intersection P between the steering axis of the wheel 12F and the road surface is positioned forward of the grounding point O of the steered wheel.

The turning of the wheel 12F does not refer to the rotation of the wheel 12F itself when the vehicle 10 is traveling but to the behavior of the wheel 12F associated with the turning of the steering axis of the wheel 12F.

The following describes the mode in which the vehicle 10 travels with the wheel 12F being in a freely turnable state. FIG. 4 is a schematic view of the vehicle 10 according to the embodiment of the present invention. FIG. 4 illustrates a state where camber angles are imparted to the respective left and right wheels 12L and 12R and where the vehicle 10 is being turned under lean control. Assuming that the weight of the vehicle 10 is m, gravitational acceleration is g, lean angle under the lean control of the vehicle 10 is θ, speed of the vehicle 10 during turning is V, and turning radius is R, $F_1$ and $F_2$ can be represented by the following equations (1) and (2).

[Numeral 1]

$$F_1 = \frac{mV^2}{R} \qquad (1)$$

[Numeral 2]

$$F_2 = mg \qquad (2)$$

The following equations (3) and (4) are satisfied from a geometric relationship.

[Numeral 3]

$$F_1' = F_1 \cos \theta \qquad (3)$$

[Numeral 4]

$$F_2' = F_2 \sin \theta \qquad (4)$$

The following equation (5) is satisfied when the vehicle 10 is being turned under the conditions described above.

[Numeral 5]

$$F_1' = F_2' \qquad (5)$$

When the equations (1) to (4) are assigned to the equation (5) and arranged, the vehicle turning radius R can be calculated by the following equation (6).

[Numeral 6]

$$R = \frac{V^2}{g \tan \theta} \qquad (6)$$

The above expression (6) indicates that when the vehicle speed V during turning and the lean angle θ of the vehicle 10 are determined, the traveling direction of the vehicle 10 can be determined.

The rotation angle of the input shaft 43 of the input member 41a, i.e., the turning angle of the input member 41a as a steering angle command value input by the driver operating the input member 41a is detected by an input member operation angle sensor 123 as an input steering angle detection means. The steering wheel operation angle sensor 123 is, e.g., an encoder.

Further, a steering motor 65 as a steering actuator is provided near the steering shaft 13. In the mode in which the steering angle is controlled according to the operation of the input member 41a with the wheel 12F used as the steered wheel, the steering motor 65 rotates the lower end of the steering shaft member based on the turning angle of the input member 41a detected by the input member operation angle sensor 123.

The steering angle output from the steering motor 65 and transmitted to the wheel 12F through the steering shaft 13 and the front wheel fork 17 is detected by a front wheel steering angle sensor 124 as an output steering angle detection means. The front wheel steering angle sensor 124 is, for example, a rotation angle sensor provided in the steering motor 65 and detecting the rotation angle of a rotation axis with respect to the body. The front wheel steering angle sensor 124 is, e.g., a resolver or an encoder. The distance between the axle of the front wheel 12F and the axles of the left and right rear wheels 12L and 12R; i.e., the wheelbase is represented by $L_H$.

In the mode in which the steering angle of the wheel 12F is made freely turnable irrespective of the operation of the input member 41a, the steering angle of the wheel 12F is made freely turnable by stopping the control of the steering motor 65. Alternatively, to make the steering angle of the wheel 12F freely turnable, the steering motor 65 may be controlled to zero torque, or the steering motor 65 and the steering shaft 13 may be separated by a clutch or the like.

The vehicle 10 further includes an accelerator 45, which is a drive command device that inputs a drive force generation command, as a part of the maneuvering device 41. The accelerator 45 is a device that inputs a drive force generation command to the rotation drive device 51 according to the degree of the depression of the accelerator by the driver. The vehicle 10 further includes a brake 46. When the driver steps the brake 46, braking force is applied to the vehicle 10.

A shift switch 47 is a switch for the driver to select a traveling mode of the vehicle 10. In the present embodiment, the vehicle 10 has at least the following four traveling modes: a drive range; a neutral range; a reverse range; and a parking range. These traveling modes are similar to those of an automobile provided with a common automatic transmission.

Further, a vehicle speed sensor 122, which serves as a vehicle speed detection means for detecting the vehicle speed (traveling speed) of the vehicle 10, is provided at the lower end of the front wheel fork 17 supporting the axle of the wheel 12F. The vehicle speed sensor 122 is a sensor for detecting the vehicle speed based on the rotation speed of the wheel 12F and is, e.g., an encoder.

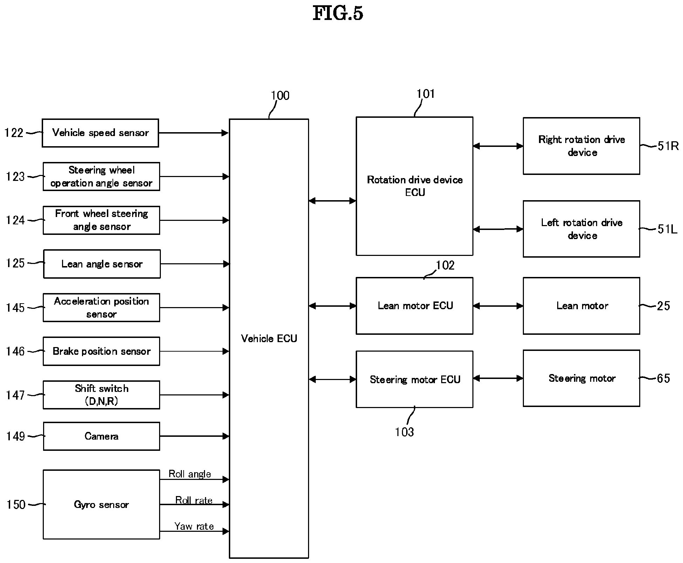

The following describes the system of the vehicle 10 according to the present invention. FIG. 5 is a block diagram illustrating the system configuration of the vehicle 10 according to the embodiment of the present invention. In FIG. 5, an ECU is the abbreviation of Electronic Control Unit. The ECU is a general-purpose information processing mechanism constituted of a CPU, a ROM storing a program operating on the CPU, and a RAM serving as a work area for the CPU.

A vehicle ECU 100 cooperates with the illustrated components connected thereto. Various control operations performed in the vehicle 10 according to the present invention are executed based on the program and data stored in a storage means such as a ROM provided in the vehicle ECU 100.

The vehicle 10 according to the present invention further includes a rotation drive device ECU 101 that controls the rotation drive device 51R and the rotation drive device 51L based on command values output from the vehicle ECU 100, a lean motor ECU 102 that controls the lean motor 25 based on command values output from the vehicle ECU 100, and a steering motor ECU 103 that controls the steering motor 65 based on command values output from the vehicle ECU 100.

The "steered wheel controller" is a generic expression of the control operation performed by the above ECUs.

The vehicle speed sensor 122 detects the vehicle speed of the vehicle 10, and vehicle speed data detected by the vehicle speed sensor 122 is input to the vehicle ECU 100.

The input member operation angle sensor 123 detects the steering wheel angle of the input member 41a, and steering wheel angle data of the input member 41a detected by the input member operation angle sensor 123 is input to the vehicle ECU 100.

The front wheel steering angle sensor 124 detects the steering angle of the front wheel 12F, and steering angle data of the wheel 12F detected by the front wheel steering angle sensor 124 is input to the vehicle ECU 100.

The lean angle sensor 125 detects the inclination amount of the vehicle 10, and inclination amount data of the vehicle 10 detected by the lean angle sensor 125 is input to the vehicle ECU 100.

An acceleration position sensor 145 detects the depression amount of the accelerator 45 by the driver, and depression amount data of the accelerator 45 detected by the acceleration position sensor 145 is input to the vehicle ECU 100.

A brake position sensor 146 detects the depression amount of the brake 46 by the driver, and depression amount data of the brake 46 detected by the brake position sensor 146 is input to the vehicle ECU 100.

A shift switch position sensor 147 detects at which one of the drive range, neutral range and reverse range the shift switch 47 is positioned, and the position detected by the shift switch position sensor 147 is input to the vehicle ECU 100.

A camera 149 acquires moving image data ahead of the vehicle 10 and transmits the acquired moving image data to the vehicle ECU 100. The vehicle ECU 100 analyzes the moving image data transmitted from the camera 149 to perform prediction or estimation concerning the vehicle 10. Although the camera 149 is used for such purposes in the present embodiment, radar or the like may be used in place of the camera 149.

A gyro sensor 150 detects at least a roll angle, a roll rate, and a yaw rate and transmits the detected data to the vehicle ECU 100. The vehicle ECU 100 uses the received roll angle, roll rate, and yaw rate for the control of the vehicle 10.

The above data thus input to the vehicle ECU 100 are used for the control of the rotation drive device 51R, rotation drive device 51L, lean motor 25 and steering motor ECU 103.

The following describes the traveling modes of the thus configured vehicle 10. In the vehicle 10 according to the present invention, the wheel 12F as the steered wheel is actively steered during a low-speed operation in order to enhance driving stability, while during a high-speed operation, the steering angle of the steered wheel is made freely turnable so as to follow the lean control of the wheels 12L and 12R. The lean control of the wheels 12L and 12R is performed as needed during both high- and low-speed operations. Hereinafter, the traveling mode during the low-speed operation of the vehicle 10 is referred to as "first mode", and that during the high-speed operation is referred to as "second mode".

Hereinafter, the first mode and second mode will be described.

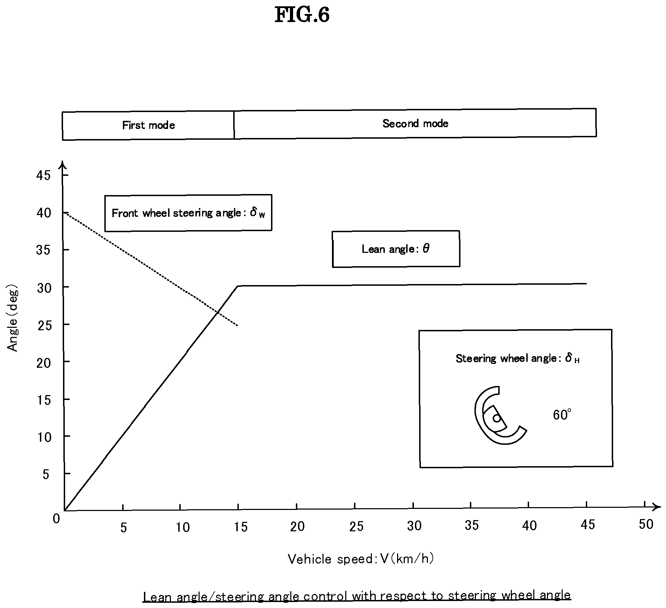

FIG. 6 is a view conceptually explaining the traveling state of the vehicle 10 according to the embodiment of the present invention. In FIG. 6, it is assumed that the turning angle of the input member 41a is set to 60° to the right and that the vehicle speed is increased from 0 km/h. Hereinafter, the vehicle speed at the boundary for switching between the first and second modes is set to 15 km/h, but the boundary value is not limited thereto.

In the present embodiment, switching between the first and second modes is made based on the vehicle speed of the vehicle 10 detected by the vehicle speed sensor 122. Alternatively, however, the switching may be made based on any parameter other than the vehicle speed detected by the vehicle speed sensor 122 as long as the first and second modes are set during the low-speed operation and during the high-speed operation, respectively.

Further, in the present embodiment, the relationship between a front wheel steering angle $\delta_W$ ($\delta_W 1$ is the initial steering angle of the wheel 12F (front wheel)) and a turning angle $\delta_H$ of the input member 41a and the relationship between a lean angle $\theta$ and the turning angle $\delta_H$ are represented by the following equations (7) and (8).

[Numeral 7]

$$\delta_W 1 = \delta_H / k_2 \qquad (7)$$

[Numeral 8]

$$\theta = \delta_H / k_1 \qquad (8)$$

In the above equations (7) and (8), $k_1$ and $k_2$ are constants and set to 60/30 and 60/40, respectively, but not limited thereto. $k_1$ is an imaginary lean gear ratio, and $k_2$ is like an imaginary steering gear ratio. Any numerical value can be set for $k_1$ and $k_2$ as long as it contributes to ease of driving operation of the vehicle 10.

Further, in FIG. 6, the dashed line denotes the steering angle $\delta_W$ of the wheel 12F, and the continuous line denotes the lean angle $\theta$ of the vehicle 10.

When the vehicle speed is increased from 0 km/h with the turning angle $\delta_H$ of the input member 41a set to 60°, the vehicle 10 starts traveling in the first mode. At the start up from 0 km/h, the wheel 12F as the steered wheel is steered at 40°, and the steering angle of the wheel 12F is gradually reduced. On the other hand, the lean angle $\theta$ of the vehicle 10 is gradually increased from 0. The steered wheel 12F and the lean angle $\theta$ of the vehicle 10 are gradually reduced and gradually increased, respectively, according to a linear function, but not limited thereto. Further, the lean angle $\theta$ of the vehicle 10 may remain at 0 until the vehicle speed becomes a predetermined speed (e.g., 3 km/h) and may then be gradually increased. The term "gradual increase" in the appended claims includes the content of the present embodiment that the lean angle $\theta$ may remain at 0 until the vehicle speed becomes a predetermined speed (e.g., 3 km/h).

The first mode is switched to the second mode at 15 km/h which is the boundary value. In the second mode after the switching timing, the steering angle of the wheel 12F as the steered wheel is made freely turnable, and the lean angle θ is set to 30° as specified by the equation (8). Afterward, even when the vehicle speed V is further increased, turning of the vehicle 10 is controlled only by the lean angle θ in the second mode corresponding to the high-speed operation, and the steering angle of the wheel 12F is made freely turnable so as to follow turning control based on the lean angle θ.

Conventionally, in the above second mode, when a sudden external disturbance occurs, specifically, when the vehicle body is inclined by inclination or irregularities of a road surface or when the vehicle body receives a crosswind, the vehicle may turn against the driver's intention. Further, the driver can recognize a state where the vehicle body is traveling on an inclined or bumpy road or receiving a crosswind only by visual sensation and G, causing a delay in driver's response.

To solve the problems as described above, in the vehicle 10 according to the present invention, a spring mechanism is adopted as a connection mechanism that connects the input shaft 43 and the steering shaft 13 with a predetermined fastening force allowing for torque transmission from the steering shaft 13 to the input shaft 43. Further, the predetermined fastening force is set to a level allowing the steering angle of the wheel 12F to follow the turning direction determined by inclination of the vehicle body.

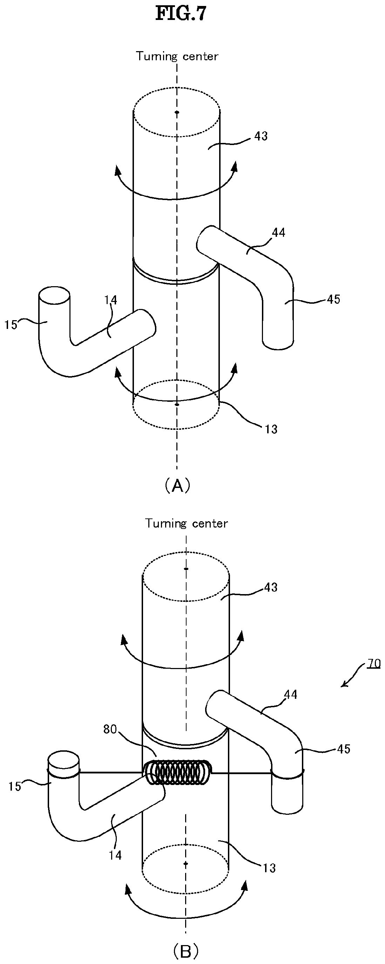

FIGS. 7A and 7B are views illustrating an example of the connection mechanism (spring mechanism) in the vehicle 10 according to the embodiment of the present invention. FIG. 7A illustrates an example of a shaft structure when a spring 80 is used.

As illustrated in FIG. 7A, the input shaft 43 has a radiating rod 44 extending radially from the turning center thereof and a downward rod 45 extending downward from the radiating rod 44. On the other hand, the steering shaft 13 has a radiating rod 14 extending radially from the turning center thereof and an upward rod 15 extending upward from the radiating rod 14. The spring 80 is installed between the downward rod 45 of the input shaft 43 and the upward rod 15 of the steering shaft 13, as illustrated in FIG. 7B.

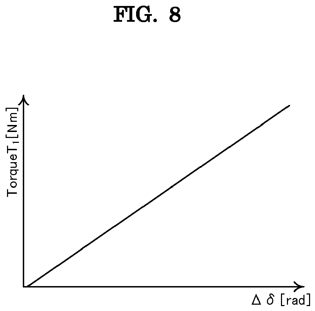

With the above configuration, a torque $T_1$ based on an angular difference $\Delta\delta$ between the angle $\delta_H$ of the input shaft 43 and the angle $\delta_W$ of the steering shaft 13, which is represented by the following equation (9), can be generated by the spring 80. In the following equation (9), k is the spring constant of the spring 80. The following equation (9) is an approximate equation. FIG. 8 is a graph for explaining the relationship between an angular difference between the shafts and the torque generated by the spring 80.

[Numeral 9]

$$T_1 = (\delta_H - \delta_W) \times k\,[Nm] \qquad (9)$$

As described above, the vehicle 10 according to the present invention is provided with the connection mechanism that connects the input shaft 43 and the steering shaft 13 with a fastening force allowing the steering angle of the steered wheel (wheel 12F) to follow the turning direction determined by inclination of the vehicle body and allowing for torque transmission from the steering shaft 13 to the input shaft 43. Thus, according to the vehicle 10 of the present invention, even when a sudden external disturbance occurs, specifically, even when the vehicle body is inclined by inclination or irregularities of a road surface or when the vehicle body receives a crosswind, it is possible to mitigate driving instability, which can ensure driving stability and prevent the vehicle from turning against the driver's intention.

Further, in the vehicle 10 according to the present invention, the input shaft 43 and the steering shaft 13 are connected to each other through the connection mechanism, so that the driver can recognize a state where the vehicle body is traveling on an inclined or bumpy road or receiving a crosswind through his or her tactile sensation, thus preventing a delay in driver's response.

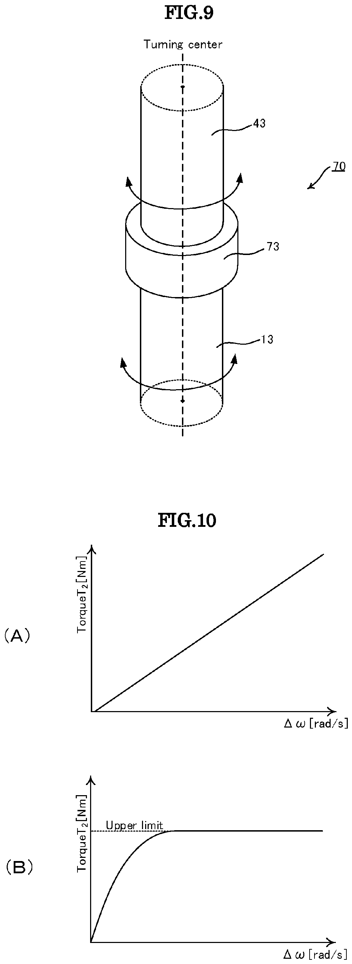

The following describes another embodiment of the present invention. In the vehicle 10 according to the present invention, the damper mechanism 70 is provided, as a connection mechanism, between the input shaft 43 and the steering shaft 13. That is, the input shaft 43 and the steering shaft 13 having the same turning center are connected through the damper mechanism 70. FIG. 9 is a view illustrating an example of a connection mechanism (damper mechanism 70) in the vehicle 10 according to the another embodiment of the present invention. FIG. 9 illustrates only the input shaft 43, steering shaft 13 and damper mechanism 70. The damper mechanism 70 is constituted by a rotary damper 73.

An angular speed $\omega_1$ of the input shaft 43 can be represented by the following equation (10), and an angular speed $\omega_2$ of the steering shaft 13 can be represented by the following equation (11).

[Numeral 10]

$$\omega_1 = \frac{d\delta_H}{dt} \qquad (10)$$

[Numeral 11]

$$\omega_2 = \frac{d\delta_W}{dt} \qquad (11)$$

At this time, a torque $T_2$ generated by the damper mechanism 70 is obtained by multiplying a difference between the angular speed $\omega_1$ of the input shaft 43 and the angular speed $\omega_2$ of the steering shaft 13 by a predetermined constant c and can be represented by the following equation (12).
[Numeral 12]

$$T_2 = (\omega_1 - \omega_2) \times c\,[Nm] \qquad (12)$$

In the vehicle 10 according to the present invention, even in the second mode in which the steering angle of the steered wheel (12F) is made freely turnable, information concerning the inclination of the vehicle body due to inclination or irregularities of a road surface or a crosswind is transmitted to the driver through the steering shaft 13, the damper mechanism 70 as a connection mechanism, and the input shaft 43 by a torque generated by the damper mechanism 70. This allows the driver to perform a counter operation against the above external disturbances.

The above equation (12) reveals that the larger an angular speed difference $\Delta\omega$ between the angular speed $\omega_1$ of the input shaft 43 and the angular speed $\omega_2$ of the steering shaft 13 is, the larger the torque $T_1$ generated by the damper mechanism 70 becomes. FIGS. 10A and 10B are views for explaining the relationship between the angular speed difference $\Delta\omega$ between the angular speed $\omega_1$ of the input shaft 43 and the angular speed $\omega_2$ of the steering shaft 13 and the torque $T_1$ generated by the damper mechanism 70. FIG. 10A illustrates the relationship represented by the equation (12). When the angular speed difference $\Delta\omega$ is excessively large, the torque $T_1$ generated by the damper mechanism 70 becomes excessively large, with the result that the large torque is transmitted to the input member 41a through the input shaft 43, which may place a burden on the driver.

Thus, as illustrated in FIG. 10B, it is preferable to place an upper limit on a turning torque (torque transmission amount) generated during transmission of the turning torque between the shafts. As the damper mechanism 70 to be used in this case, a damper in which an upper limit is placed on the generation torque may be appropriately used.

In particular, when a variable damper using MR (Magneto-Rheological) fluid is used as the damper mechanism 70, the toque transmission amount can be minutely controlled. For example, when such a variable damper is used, it is possible to control the torque transmission amount according to a parameter such as the angular speed difference $\Delta\omega$ between the angular speed $\omega_1$ of the input shaft 43 and the angular speed $\omega_2$ of the steering shaft 13, the angular difference $\Delta\delta$ between the angle $\delta_H$ of the input shaft 43 and the angle $\delta_W$ of the steering shaft 13, or the vehicle speed of the vehicle 10.

Although the rotary damper or variable damper is used as the damper mechanism 70 serving as a connection mechanism in the above embodiment, a linear damper 74 that provides damping against linear movement can also be used in the vehicle 10 according to the present invention.

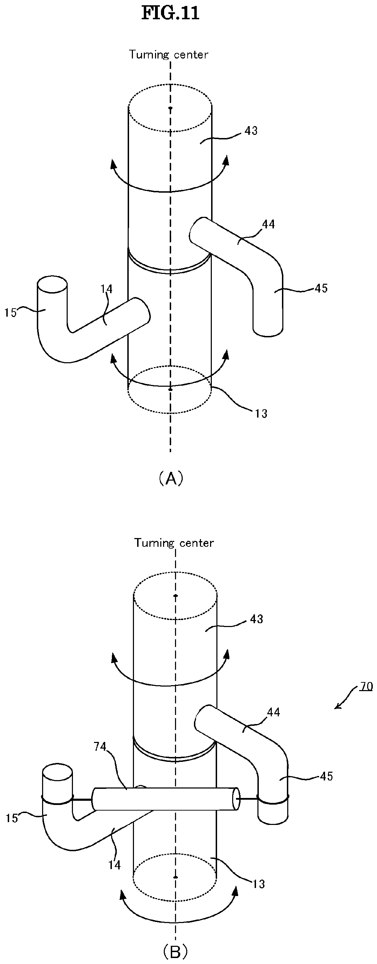

FIGS. 11A and 11B are views illustrating an example of the connection mechanism (damper mechanism 70) in the vehicle 10 according to still another embodiment of the present invention. FIG. 11A illustrates an example of a shaft structure when a linear damper 74 is used.

As illustrated in FIG. 11A, the input shaft 43 has a radiating rod 44 extending radially from the turning center thereof and a downward rod 45 extending downward from the radiating rod 44. On the other hand, the steering shaft 13 has a radiating rod 14 extending radially from the turning center thereof and an upward rod 15 extending upward from the radiating rod 14. The linear damper 74 is installed between the downward rod 45 of the input shaft 43 and the upward rod 15 of the steering shaft 13, as illustrated in FIG. 11B.

According to the above embodiment, the same effect as that of the first embodiment can be obtained, and the cost can be reduced because of the use of a commonly used linear damper 74.

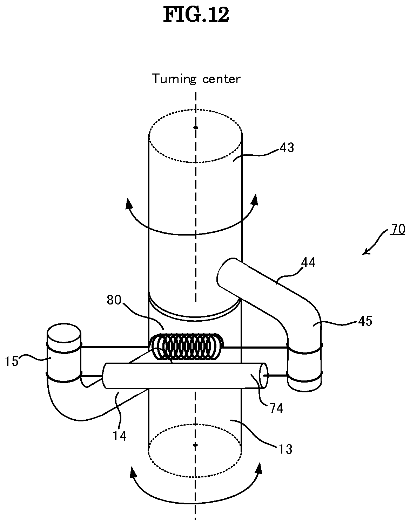

The following describes a still another embodiment of the vehicle 10 according to the present invention. FIG. 12 is a view illustrating an example of the connection mechanism in the vehicle 10 according to the still another embodiment of the present invention. The spring 80 is installed between between the downward rod 45 of the input shaft 43 and the upward rod 15 of the steering shaft 13, in addition to the linear damper 74.

In the embodiment illustrated in FIG. 12, a torque $T_{total}$ represented by the following equation (13) is generated by the damper mechanism 70 and spring mechanism.

[Numeral 13]

$$T_{total} = T_1 + T_2 [Nm] \qquad (13)$$

According to the above embodiment, the same effect as that of the first embodiment can be obtained, and the torque characteristics of the damper mechanism 70 can be changed as needed.

As described above, in the vehicle 10 according to the present invention, the input shaft 43 and the steering shaft 13 are connected with a comparatively weak fastening force allowing the steering angle of the steered wheel (wheel 12F) to follow the turning direction determined by inclination of the vehicle body. This can appropriately delay responsiveness of the steering of the steered wheel (wheel 12F) to prevent overturning of the vehicle 10. Further, this can also prevent an excessive delay in responsiveness of the steering of the steered wheel (wheel 12F), so that it is also possible to prevent degradation in responsiveness in a state where the steered wheel (wheel 12F) is made freely turnable.

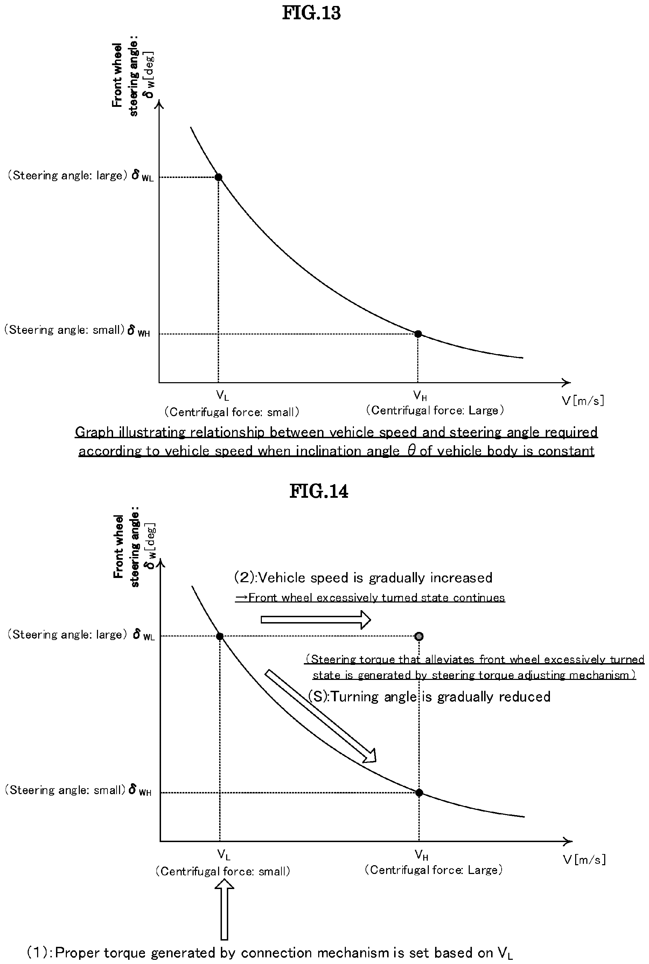

The following describes still another embodiment of the vehicle 10 according to the present invention. FIG. 13 is a graph illustrating the relationship between the vehicle speed and the steering angle required according to the vehicle speed when the inclination angle $\theta$ of the vehicle body is constant. Although the steering angle $\delta_W$ of the wheel 12F (front wheel) is assumed as the steering angle in this example, the idea of the present embodiment can be applied to a vehicle in which the front wheel is inclined, and the rear wheel is steered.

Description will be made assuming that the body of the vehicle 10 is inclined at a constant inclination angle $\theta$. Further, as an example, a case where the speed of the vehicle 10 is a low speed $V_L$ and a case where the speed of the vehicle 10 is $V_H$ which is higher than the low speed $V_L$ are compared.

When the vehicle speed is increased with the inclination angle $\theta$ of the body of the vehicle 10 set constant, the inclination of the vehicle body and the centrifugal force are not balanced unless the turning radius is increased as the vehicle speed is increased. Thus, to prevent overturning of the vehicle, the steering angle $\delta_W$ must be reduced as the vehicle speed is increased.

When the vehicle 10 travels at the low speed $V_L$ with the inclination angle $\theta$ of the vehicle body set constant, the required turning radius must be reduced to obtain a centrifugal force balanced with the inclination of the vehicle body during turning operation. The steering angle at this time is assumed to be $\delta_{WL}$.

On the other hand, when the vehicle 10 travels at the high speed $V_H$ with the inclination angle $\theta$ of the vehicle body set constant, a centrifugal force balanced with the inclination of the vehicle body during a turning operation is larger than that obtained based on the above turning radius. The steering angle at this time is assumed to be $\delta_{WH}$ ($\delta_{WH} < \delta_{WL}$).

Therefore, the relationship between the vehicle speed and the steering angle required according to the vehicle speed when the inclination angle $\theta$ of the vehicle body is constant is represented by the curve as illustrated in FIG. 13 on which a point ($V_L$, $\delta_{WL}$) and a point ($V_H$, $\delta_{WH}$) are plotted.

In the vehicle 10 according to the present invention, the connection mechanism that connects the input shaft 43 and the steering shaft 13 with a predetermined fastening force allowing for torque transmission from the steering shaft 13 to the input shaft 43 is adopted. Here, a problem associated with such a connection mechanism will be described with reference to FIG. 14.

In FIG. 14, it is assumed that a torque generated between the steering shaft 13 and the input shaft 43 by the fastening force of the connection mechanism is set based on the low speed $V_L$ ((1) in FIG. 14). In a case where the vehicle speed is gradually increased from the low speed VL to the high speed VH with the inclination angle of the vehicle body kept constant, when the driver maintains the turning angle of the input member 41a as it is at the time of low speed VL, a state where the steering angle is turned excessively continues ((2) in FIG. 14).

Thus, in the present embodiment, a steering torque adjusting mechanism that controls a torque (steering torque) to be added to the steering shaft 13 is provided. The arrow (S) in FIG. 14 indicates a direction in which the excessively turned state of the input member 41a is alleviated by the steering torque generated by the steering torque adjusting mechanism.

The steering torque adjusting mechanism is set so as to generate a torque in a direction reverse to the direction of a torque generated by the connection mechanism. Although the steering torque adjusting mechanism may have any type of configuration as long as it can control the steering torque to be added to the steering shaft 13, the steering motor 65 may be made to serve as the steering torque adjusting mechanism, for example.

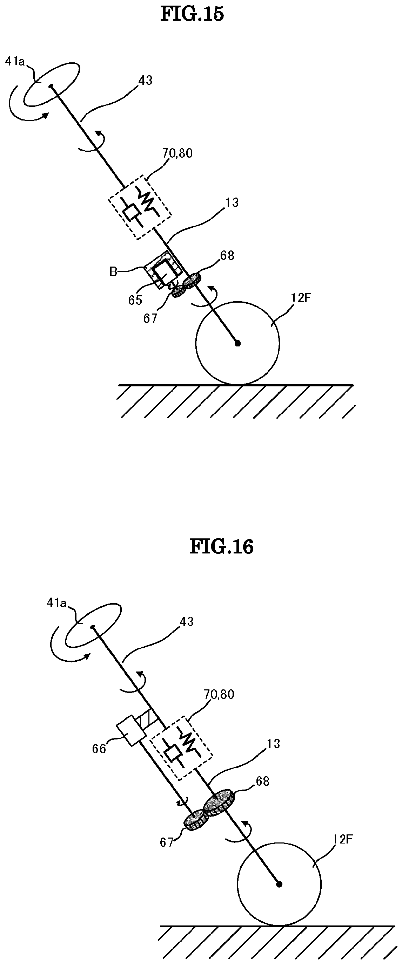

FIG. 15 is a schematic view for explaining the steering torque adjusting mechanism in the vehicle 10 according to the still another embodiment of the present invention.

The vehicle 10 according to the present invention includes the input shaft 43 that transmits the turning of the input member 41a, the steering shaft 13 that transmits the turning of the wheel 12F and the connection mechanism interposed between the input shaft 43 and the steering shaft 13 and having the damper mechanism 70 and/or spring 80.

A motor side gear 67 is mounted to the rotary shaft of the steering motor 65, and a steering shaft side gear 68 rotated together with the steering shaft 13 is mounted to the steering shaft 13. The motor side gear 67 and the steering shaft side gear 68 are engaged with each other. The steering motor 65 is mounted to the vehicle body side such that it is fixed to a part B of the vehicle body of the vehicle 10.

With the above configuration, the torque of the steering motor 65 is transmitted from the motor side gear 67 to the steering shaft side gear 68 and then to the steering shaft 13. Thus, the steering motor 65 can function as the steering torque adjusting mechanism for controlling the steering torque to be added to the steering shaft 13.

As can be seen from FIG. 14, the torque (i.e., a torque generated by the steering torque adjusting mechanism) for alleviating the excessively turned state of the input member 41a must be increased as the vehicle speed of the vehicle 10 becomes higher. Thus, when the vehicle speed detected by the vehicle speed sensor 122 is not 0, the torque generated by the steering torque adjusting mechanism is set so as to be increased as the vehicle speed detected by the vehicle speed sensor 122 is higher.

On the other hand, when the vehicle speed detected by the vehicle speed sensor 122 is 0, and when the input member 41a is disconnected, i.e., at the time of static steering operation of the input member 41a, it is ideal that the steering shaft 13 and the input shaft 14 are completely fastened to each other.

Thus, when the vehicle speed detected by the vehicle speed sensor 122 is 0, the torque generated by the steering torque adjusting mechanism is made to have such a direction and magnitude as to eliminate a rotational phase difference between the input shaft 43 and the steering shaft 13, thereby achieving a state where the steering shaft 13 and the input shaft 43 are completely fastened to each other.

Thus, in the present embodiment, the steering torque adjusting mechanism that controls the steering torque to be added to the steering shaft 13 according to the vehicle speed detected by the vehicle speed sensor 122 is provided, thus improving ease of operation for the driver.

Although the steering motor 65 fixed to the vehicle body side is used as the steering torque adjusting mechanism to adjust the steering torque to be added to the steering shaft 13 in the above embodiment, the steering torque adjusting mechanism having another configuration may be adopted. FIG. 16 is a schematic view for explaining another steering torque adjusting mechanism.

Also, the steering torque adjusting mechanism in the present embodiment includes the connection mechanism interposed between the input shaft 43 and the steering shaft 13 and having the damper mechanism 70 and/or spring 80.

The motor side gear 67 is mounted to the rotary shaft of a torque adjusting motor 66, and the steering shaft side gear 68 rotated together with the steering shaft 13 is mounted to the steering shaft 13. The motor side gear 67 and the steering shaft side gear 68 are engaged with each other.

In the present embodiment, a housing part of the torque adjusting motor 66 is fixed to the input shaft 43. With the above configuration, the torque of the torque adjusting motor 66 is transmitted from the motor side gear 67 to the steering shaft side gear 68 and then to the steering shaft 13. Thus, the torque adjusting motor 66 fixed to the input shaft 43 can function as the steering torque adjusting mechanism for controlling/adjusting the steering torque to be added to the steering shaft 13.

The operability of the vehicle 10 can also be improved by the steering torque adjusting mechanism having the configuration as illustrated in FIG. 16.

In the example of FIG. 16, the torque adjusting motor 66 adopted as the steering torque adjusting mechanism may be made to serve as the connection mechanism having the damper mechanism 70 and/or spring 80. That is, the damper mechanism 70 and the spring 80 constituting the connection mechanism are removed from the configuration illustrated in FIG. 16, and a torque corresponding to the removed connection mechanism is reproduced by the torque adjusting motor 66, whereby the same effect as that when the damper mechanism 70 and the spring 80 are not removed can be obtained.

As described above, the vehicle according to the present invention is provided with the connection mechanism that connects the input shaft and the steering shaft with a fastening force allowing the steering angle of the steered wheel to follow the turning direction determined by inclination of the vehicle body and allowing for torque transmission from the steering shaft to the input shaft. Thus, according to the vehicle of the present invention, even when a sudden external disturbance occurs, specifically, even when the vehicle body is inclined by inclination or irregularities of a road surface or when the vehicle body receives a crosswind, it is possible to mitigate driving instability, which can ensure driving stability and prevent the vehicle from turning against the driver's intention.

Further, in the vehicle according to the present invention, the input shaft and the steering shaft are connected to each other through the connection mechanism. Thus, according to the vehicle of the present invention, the driver can recognize a state where the vehicle body is traveling on an inclined or bumpy road or receiving a crosswind through his or her tactile sensation, thus preventing a delay in driver's response.

**[Industrial Applicability]**

The present invention relates to a small-sized vehicle attracting attention from the viewpoint of energy savings. Conventionally, such a vehicle has problems in that it may turn against the driver's intention when a sudden external disturbance occurs and that it is difficult for a driver to recognize irregularities of a road surface or influence of a crosswind, causing a delay in driver's response. To cope with the above problems, the vehicle according to the present invention is provided with the connection mechanism that connects the input shaft and the steering shaft with a fastening force allowing the steering angle of the steered wheel to follow the turning direction determined by inclination of the vehicle body and allowing for torque transmission from the steering shaft to the input shaft. Thus, according to the vehicle of the present invention, even when a sudden external disturbance occurs, specifically, even when the vehicle body is inclined by inclination or irregularities of a road surface or when the vehicle body receives a crosswind, it is possible to ensure driving stability. Therefore, the present invention has great industrial applicability.

**Reference Signs List**

| | |
|---|---|
| 10: | Vehicle |
| 11: | Boarding part |
| 11a: | Seat |
| 11b: | Foot rest |
| 11c: | Windshield |
| 12F: | Wheel |
| 12R: | Wheel |
| 12L: | Wheel |
| 13: | Steering shaft |
| 14: | Radiating rod |
| 15: | Upward rod |
| 17: | Front wheel fork |
| 18: | Road surface |
| 20: | Main body part |
| 21: | Central vertical member |
| 25: | Lean motor |
| 30: | Link mechanism |
| 33L: | Vertical link unit |
| 33R: | Vertical link unit |
| 31U: | Lateral link unit |
| 31D: | Lateral link unit |
| 41: | Maneuvering device |
| 41a: | Input member |
| 43: | Input shaft |
| 44: | Radiating rod |
| 45: | Downward rod |
| 45: | Accelerator |
| 46: | Brake |
| 47: | Shift switch |
| 51L: | Rotation drive device |
| 51R: | Rotation drive device |
| 65: | Steering motor |
| 66: | Torque adjusting motor |
| 67: | Motor side gear |
| 68: | Steering shaft side gear |
| 70: | Damper mechanism |
| 73: | Rotary damper |
| 74: | Linear damper |

80: Spring
100: Vehicle ECU
101: Rotation drive device ECU
102: Lean motor ECU
103: Steering motor ECU
122: Vehicle speed sensor
123: Input member operation angle sensor
124: Front wheel steering angle sensor
125: Lean angle sensor
145: Acceleration position sensor
146: Brake position sensor
147: Shift switch position sensor
149: Camera
150: Gyro sensor

**Claims**

1. A vehicle **characterized by** comprising:

a vehicle body provided with three or more wheels including at least a steered wheel and a pair of wheels arranged in a vehicle width direction;
an inclining part that inclines the vehicle body;
an input member that is turned to input a turning direction;
an input shaft that transmits the turning of the input member;
a steering shaft that is turned to steer the steered wheel and is turnable irrespective of the turning operation of the input member; and
a connection mechanism that connects the input shaft and the steering shaft with a fastening force allowing the steering angle of the wheel to follow the turning direction determined by inclination of the vehicle body and allowing for torque transmission from the steering shaft to the input shaft.

2. The vehicle according to claim 1, **characterized in that**
the fastening force of the connection mechanism is changed according to a difference between a turning angle of the input shaft and a turning angle of the steering shaft and/or a difference between a turning angular speed of the input shaft and a turning angular speed of the steering shaft.

3. The vehicle according to claim 2, **characterized in that**
the fastening force of the connection mechanism becomes larger as the difference between the turning angle of the input shaft and the turning angle of the steering shaft is increased and/ or
the fastening force of the connection mechanism becomes larger as the difference between the turning angular speed of the input shaft and the turning angular speed of the steering shaft is increased.

4. The vehicle according to claim 1, **characterized in that**
the connection mechanism is a spring mechanism.

5. The vehicle according to claim 1, **characterized in that**
the connection mechanism is a damper mechanism.

6. The vehicle according to claim 5, **characterized in that**
an upper limit is placed on a turning torque that the damper mechanism transmits to the shafts.

7. The vehicle according to claim 5, **characterized in that**
the damper mechanism is a variable damper using MR fluid having viscosity.

8. The vehicle according to claim 5, **characterized by** further comprising a spring mechanism whose fastening force is changed according to a difference between the turning angle of the input shaft and the turning angle of the steering shaft.

9. The vehicle according to any one of claims 1 to 8, **characterized in that**
the inclining part inclines the vehicle body by generating a difference in drive force between the pair of wheels.

10. The vehicle according to any one of claims 1 to 9, **characterized by** further comprising a steering torque adjusting mechanism that adjusts a torque to be added to the steering shaft.

11. The vehicle according to claim 10, **characterized by** comprising a vehicle speed detection part that detects a vehicle speed, wherein
the steering torque adjusting mechanism adjusts the torque to be added to the steering shaft according to the vehicle speed detected by the vehicle speed detection part.

12. The vehicle according to claim 11, **characterized in that**
when the vehicle speed detected by the vehicle speed detection part is 0, the torque generated by the steering torque adjusting mechanism has such a direction and magnitude as to eliminate a rotational phase difference between the input shaft and the steering shaft.

13. The vehicle according to claim 11, **characterized in that**
when the vehicle speed detected by the vehicle speed detection part is not 0, the torque generated by the steering torque adjusting mechanism is set so as to be increased as the vehicle speed is higher.

# FIG.1

# FIG.2

Vehicle width direction

## FIG.3

(a)

(b)

## FIG.4

$$F_1 = mV^2/R$$

Lean angle

$$F_2 = mg$$

Center of gravity

FIG.5

122 — Vehicle speed sensor

123 — Steering wheel operation angle sensor

124 — Front wheel steering angle sensor

125 — Lean angle sensor

145 — Acceleration position sensor

146 — Brake position sensor

147 — Shift switch (D,N,R)

149 — Camera

150 — Gyro sensor

Roll angle

Roll rate

Yaw rate

100

Vehicle ECU

101

Rotation drive device ECU

102

Lean motor ECU

103

Steering motor ECU

Right rotation drive device — 51R

Left rotation drive device — 51L

Lean motor — 25

Steering motor — 65

# FIG.6

| First mode | Second mode |
|---|---|

Front wheel steering angle: $\delta_W$

Lean angle: $\theta$

Steering wheel angle: $\delta_H$

60°

Angle (deg)

Vehicle speed: V (km/h)

Lean angle/steering angle control with respect to steering wheel angle

# FIG.7

Turning center

(A)

Turning center

(B)

FIG. 8

## FIG.9

Turning center

43

70

73

13

## FIG.10

(A)

Torque$T_2$[Nm]

$\Delta \omega$ [rad/s]

(B)

Torque$T_2$[Nm]

Upper limit

$\Delta \omega$ [rad/s]

# FIG.11

Turning center

43

44

45

14

15

13

(A)

Turning center

43

70

44

74

45

15

14

13

(B)

# FIG.12

Turning center

43

70

44

45

80

15

74

14

13

## FIG.13

Graph illustrating relationship between vehicle speed and steering angle required according to vehicle speed when inclination angle $\theta$ of vehicle body is constant

## FIG.14

(1):Proper torque generated by connection mechanism is set based on $V_L$

## FIG.15

## FIG.16

## INTERNATIONAL SEARCH REPORT

| International application No. |
|---|
| PCT/JP2018/013328 |

A. CLASSIFICATION OF SUBJECT MATTER
Int. Cl. B62K5/10(2013.01)i, B62K5/08(2006.01)i, B62K21/08(2006.01)i

According to International Patent Classification (IPC) or to both national classification and IPC

B. FIELDS SEARCHED

Minimum documentation searched (classification system followed by classification symbols)
Int. Cl. B62K5/10, B62K5/08, B62K21/08, B62D6/00

Documentation searched other than minimum documentation to the extent that such documents are included in the fields searched

```
Published examined utility model applications of Japan     1922-1996
Published unexamined utility model applications of Japan   1971-2018
Registered utility model specifications of Japan           1996-2018
Published registered utility model applications of Japan   1994-2018
```

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| A | JP 2016-222024 A (EQUOS RESEARCH CO., LTD.) 28 December 2016, paragraphs [0021]-[0028], fig. 1-3 & WO 2016/190318 A1 & CN 107531305 A | 1-13 |
| A | JP 2001-26277 A (KOYO SEIKO CO., LTD.) 30 January 2001, paragraphs [0033]-[0038], fig. 3 (Family: none) | 1-13 |
| A | JP 2011-46273 A (EQUOS RESEARCH CO., LTD.) 10 March 2011, paragraphs [0050]-[0053] (Family: none) | 1-13 |
| A | EP 2530002 A1 (SUNRISE MEDICAL LIMITED) 05 December 2012, entire text, all drawings (Family: none) | 1-13 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 01.06.2018 | 12.06.2018 |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**REFERENCES CITED IN THE DESCRIPTION**

**Patent documents cited in the description**

- JP 2013071688 A